(19) Europäisches Patentamt
European Patent Office
Office européen des brevets

(11) Publication number : **0 461 270 B1**

# (12) EUROPEAN PATENT SPECIFICATION

(45) Date of publication of patent specification : **30.11.94 Bulletin 94/48**

(51) Int. Cl.$^5$ : **G02C 7/04**

(21) Application number : **91901551.1**

(22) Date of filing : **28.12.90**

(86) International application number : **PCT/JP90/01736**

(87) International publication number : **WO 91/10155 11.07.91 Gazette 91/15**

## (54) CONTACT LENS MATERIAL AND CONTACT LENS.

(30) Priority : **29.12.89 JP 342438/89**

(43) Date of publication of application : **18.12.91 Bulletin 91/51**

(45) Publication of the grant of the patent : **30.11.94 Bulletin 94/48**

(84) Designated Contracting States : **DE ES FR GB NL**

(56) References cited :
EP-A- 0 288 567
EP-A- 0 395 583
JP-A-61 138 613

(73) Proprietor : **HOYA CORPORATION**
**7-5, Naka-Ochiai 2-Chome**
**Shinjuku-ku Tokyo 161 (JP)**

(72) Inventor : **YOKOYAMA, Yuuichi**
**24-304, Ekimae Plaza Second**
**2-15-1 Akamidai**
**Kounosu-shi Saitama-ken 365 (JP)**
Inventor : **IWAMOTO, Hidetoshi**
**1263-9, Oaza Shichihongi**
**Kamisato-machi**
**Kodama-gun Saitama-ken 369-03 (JP)**

(74) Representative : **Hansen, Bernd, Dr.rer.nat. et al**
**Hoffmann, Eitle & Partner**
**Patentanwälte**
**Postfach 81 04 20**
**D-81904 München (DE)**

EP 0 461 270 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a contact lens material and a contact lens. More specifically, it relates to a rigid contact lens material having oxygen permeability and a contact lens produced from said rigid contact lens material.

The applicant has submitted a separate set of claims 1-10 for spain.

In general, contact lenses are largely classified into hard contact lenses and soft contact lenses, and preferred are those hard contact lenses which have high shock resistance or impact resistance. As a hard contact lens material having improved shock resistance, there has been proposed a hard contact lens material comprising a a copolymer composed mainly of a siloxane oligomer of the following formula (III) and at least one monomer component selected from a fluorine-containing (meth)acrylate and a silicone-containing (meth)acrylate (Japanese Unexamined Patent Publication No. 63-85719) & EP-A-288 567. In the present specification, the term "(meth)acrylate" refers to both acrylate and methacrylate.

(III)

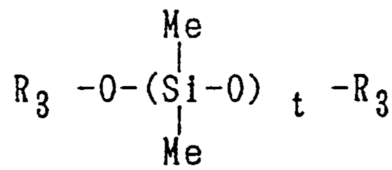

[wherein t is an integer of 10 to 200, Me is $CH_3$, $R_1$ is

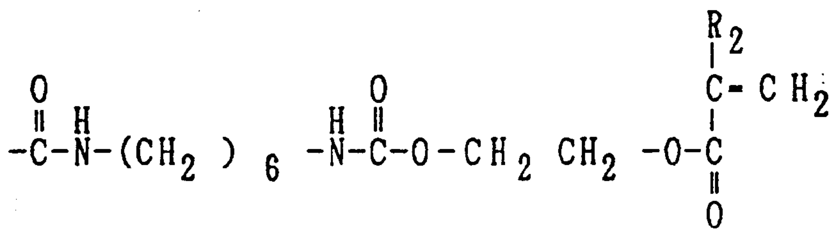

(a)

or

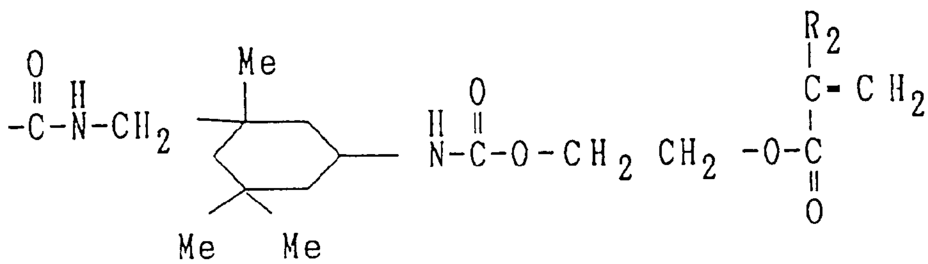

(b)

(in which $R_2$ = H or Me)].

Being excellent in oxygen permeability, the above conventional hard contact lens has not yet been fully satisfactory with regard to the shock resistance due to the use of the siloxane oligomer of the above formula (III). It has therefore been desired to develop a contact lens material having excellent oxygen permeability and further improved shock resistance.

The present invention has been made to overcome the above problem. And it is an object of the present invention to provide a contact lens material having both sufficient oxygen permeability and sufficient shock resistance necessary for actually fitting on or wearing a contct lens, and a contact lens produced therefrom.

DISCLOSURE OF THE INVENTION

The present invention has been made in order to achieve the above object. And the present invention characteristically provides a contact lens material comprising a copolymer obtained from a monomer mixture containing, as an essential component, a siloxane oligomer of the following formula (I) and/or a siloxane oligomer of the following formula (II), and a contact lens produced by processing the above contact lens material.

(I)

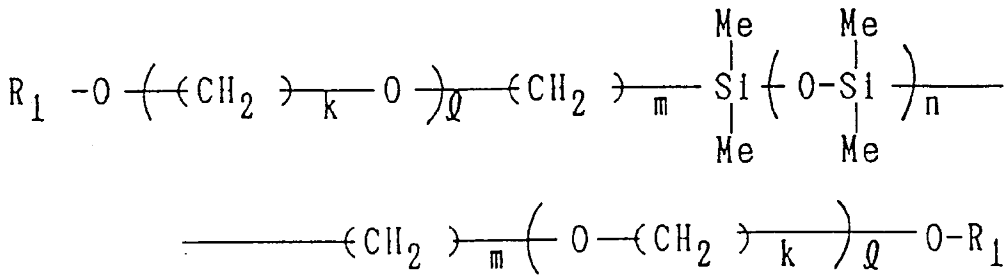

[wherein k is an integer of 1 to 3, ℓ is 0 or 1, m is an integer of 0 to 3, n is an integer of 9 to 199, Me is $CH_3$, and
$R_1$ is

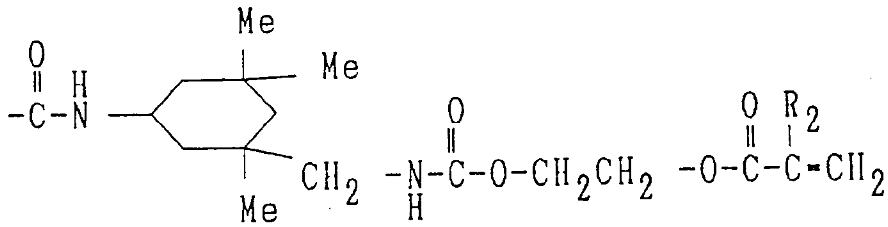

(in which $R_2$ is H or Me)].

(II)

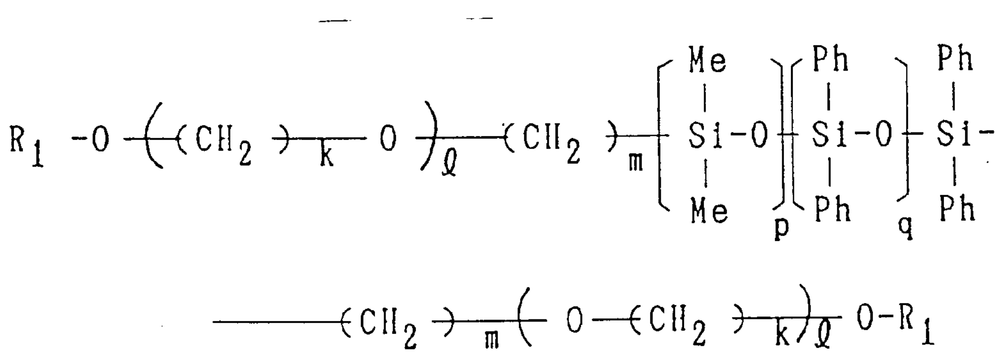

[wherein k is an integer of 1 to 3, ℓ is 0 or 1, m is an integer of 0 to 3, p+q is an integer of 11 to 139 (provided that p≧0 and q≧0), Me is $CH_3$, Ph is

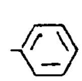 ,

and $R_1$ is as defined in the formula (I).]

MOST PREFERRED EMBODIMENTS FOR WORKING THE INVENTION

The present invention will be detailed hereinafter.

The siloxane oligomer(s) of the above formula (I) and/or the above formula (II), used in the present invention, is/are essential since these work to achieve an improvement in the shock resistance of the resultant contact lens material. Preferred are those which have a molecular weight in the range of 800 to 6,000. When the molecular weight is less than 800, the material cannot be imparted with sufficient shock resistance. When the molecular weight is more than 6,000, the material is made soft. More preferred are those which have a molecular weight in the range of 1,000 to 5,000.

The amount of the above siloxane oligomer(s) for use changes depending upon the kind, amount, etc. , of monomers used for the improvement in oxygen permeability. In general, it is preferably 0.1 to 15 % by weight ("%" is used in this sense hereinafter) . When this amount exceeds 15 %, the resultant polymer is undesirably liable to easily undergo plastic deformation. When it is less than 0.1 %, undesirably, no effect is produced on the improvement in shock resistance. The above amount is particularly preferably 2 to 11 %.

In the present invention, the monomer mixture for the copolymer contains at least one siloxanyl (meth)acrylate (to be referred to as "Si(M)A" hereinafter) and at least one fluorine-containing (meth)acrylate (to be referred to as "F(M)A hereinafter) in addition to the above siloxane oligomer(s).

The Si(M)A used in the present invention is selected from trimethylsiloxydimethylsilylpropyl (meth)acrylate, bis(trimethylsiloxy)methylsilylpropyl (meth)acrylate, tris(trimethylsiloxy)silylpropyl (meth)acrylate, bis[bis(trimethylsiloxy)methylsiloxanyl]trimethylsiloxysilylpropyl (meth)acrylate, bis(trimethylsiloxy)methylsiloxanylmonopentamethyldisiloxanylmonotrimethylsiloxanylsilylpropyl (meth)acrylate, bis(pentamethyldisiloxanyl)bis(trimethylsiloxy)methylsiloxanylsilylpropyl (meth)acrylate, etc. In the present invention, these are used alone or in combination.

This Si(M)A is used to obtain a contact lens imparted with high oxygen permeability. The amount thereof for use is preferably 15 to 50 %. When this amount is less than 15 %, it is difficult to obtain the desired oxygen permeability. When it is more than 50 %, the copolymer is possibly softened. The amount of the Si(M)A is particularly preferably 18 to 35 %, and preferred is tris(trimethylsiloxy)silylpropyl methacrylate.

The F(M)A used in the present invention is selected, for example, from 2,2,2-trifluoroethyl (meth)acrylate, 2,2,2,2′,2′,2′-hexafluoroisopropyl (meth)acrylate, 2,2,3,3,4,4,4-heptafluorobutyl (meth)acrylate, 2,2,3,3,4,4,5,5,6,6,7,7,8,8,8-pentadecafluorooctyl (meth)acrylate, 2,2,3,3,4,4,5,5,6,6,7,7,8,8,9,9-hexadecafluorononyl (meth)acrylate, perfluorooctylethyloxypropylene (meth)acrylate, perfluorooctylethyloxyethylene (meth)acrylate, etc. In the present invention, these are used alone or in combination. This F(M)A not only contributes to improvement in oxygen permeability of the resultant contact lens material, but also contributes to improvement in shock resistance of the resultant contact lens material as a result of its excellent compatibility with the siloxane oligomer and the consequent promotion of dispersion of the siloxane oligomer. The amount of the F(M)A for use is preferably 15 to 60 %. When this amount is less than 15 %, the oxygen permeability is extraordinarily decreased. When it exceeds 60 %, the contact lens material is made soft. It is preferably 25 to 52 %, and the use of at least two out of the above F(M)A's is more preferred.

The monomer mixture to be copolymerized in the present invention may further contain the following monomer as required in addition to the above-specified monomers. Examples of such a monomer are alkyl (meth)acrylate (to be referred to as "R(M)A" hereinafter), a hydrophilic monomer, a crosslinking monomer, etc.

The above R(M)A may be incorporated in order to obtain a contact lens material having improved hardness. The R(M)A is selected, for example, from methyl methacrylate, ethyl methacrylate, propyl methacrylate, isopropyl methacrylate, butyl methacrylate, cyclohexyl methacrylate, 4-tert-butylcyclohexyl methacrylate, etc. These are used alone or in combination. The amount thereof for use is preferably 3 to 20 %. When this amount is less than 3 %, no effect is produced on improvement in the hardness. When it exceeds 20 %, the oxygen permeability is extraordinarily decreased. This amount is particularly preferably 4 to 16 %.

The hydrophilic monomer may be used to increase the water wettability of the contact lens material produced and improve a lens fitting sense. The hydrophilic monomer is selected, for example, from unsaturated carboxylic acids, unsaturated amides and unsaturated cyclic lactams, which are used alone or in combination. Further, in order to improve the hardness and processability of the contact lens material by improving the compatibility of the siloxane oligomer, it is preferred to use a combination of at least one unsaturated carboxylic acid with at least one unsaturated amide.

Examples of the unsaturated carboxylic acids are acrylic acid, methacrylic acid, etc., and examples of the unsaturated amides are acrylamide, methacrylamide, N,N-dimethylmethacrylamide, N,N-dimethylacrylamide, etc. Further, examples of the unsaturated cyclic lactams are pyrrolidone, etc. The amount of the hydrophilic monomer for use is preferably 2 to 20 %. When this amount is less than 2 %, no sufficient water wettability is obtained. When it exceeds 20 %, undesirably, not only the oxygen permeability is decreased, but also the copolymer is made soft, and further, the contact lens material is sometimes made turbid. This amount is particularly preferably 3 to 16 %.

The above crosslinking monomer is selected from tri(meth)acrylates or di(meth)acrylates of a dihydric or polyhydric alcohols, such as ethylene glycol di(meth)acrylate, diethylene glycol di(meth)acrylate, triethylene glycol di(meth)acrylate, tetraethylene glycol di(meth)acrylate, polyethylene glycol di(meth)acrylate, trimethylolpropane tri(meth)acrylate, 2-hydroxy-1,3-dimethacryloxypropane, etc. Further, allyl (meth)acrylate may be also used. These crosslinking monomers may be used alone or in combination. The crosslinking monomer is used in order to improve the contact lens material in hardness. The amount of the crosslinking monomer for use is preferably 0.2 to 15 %. When this amount is less than 0.2 %, the resultant contact lens is soft. When it exceeds 15 %, the lens material is sometimes liable to be fragile and poor in processability, or the resultant lens is sometimes liable to fracture. This amount is particularly preferably 1.5 to 8 %.

Being produced by any one of known polymerization methods, the copolymer forming the contact lens material of the present invention is particularly preferably produced by a bulk polymerization method. As a polymerization initiator for this polymerization, those which are known as a general radical generating agent can be used. The polymerisation initiator is selected from peroxides such as lauroyl peroxide, cumene hydroperoxide, bis-4-tert-butylcyclohexyl peroxide, etc., and azo compounds such as azobisisobutyronitrile, azobisdimethylvaleronitrile, etc. Of these, azobisisobutyronitrile is preferred. The amount of the polymerization initiator for use is 0.05 to 0.8 % based on the total weight of the monomers.

The contact lens material of the present invention can be obtained in the state, for example, of a rod or a button by homogeneously mixing the above monomer components, casting the resultant mixture solution into a mold made of a metal, glass, plastic, etc., closing the mold, elevating the temperature in a constant-temperature bath stepwise or continuously in the temperature range between 25°C and 150°C and completing the polymerization approximately for 5 to 144 hours. In addition, it is preferred to carry out the polymerization after an inert gas such as nitrogen, argon, etc., is substituted for air in the solution and the mold is closed. The resultant copolymer as a contact lens material is finished into the form of a lens by a conventional contact lens processing method, i.e. mechanical processing procedures such as cutting, polishing, etc. In the alternative, the contact lens of the present invention may be produced by casting the monomer mixture into a mold having a predetermined radius of curvature, whereby the monomer mixture can be directly formed into a lens. In the present invention, a photopolymerization method using ultraviolet light, etc., may be also employed.

Examples of the present invention will be described below, to which the present invention shall not be limited. Physical property values and indices shown in Examples and Comparative Examples below were obtained by the following methods.

Oxygen permeability coefficient: A test piece having a thickness of 0.2 mm was measured in a 0.9 % physiological saline at 35°C with a film oxygen transmissometer of Seika type supplied by Rikaseiki Kogyo K.K.

Shock resistance test: A test piece having a diameter of 12 mm and a thickness of 2 mm was prepared and subjected to a destructive test using a Dynstat tester supplied by Toyo Seiki Seisakusho K.K. In the test, the test piece was evaluated on the basis of a shock resistance index when the energy required for the destruction of polymethyl methacrylate was taken as a shock resistance index of 100.

[Example 1]

8.6 Percent of a siloxane oligomer [oligomer of the formula (I) wherein $R_2$ = H, k = 3, $\ell$ = 1, m = 3, and n = 12] ("S-1" hereinafter), 19.1 % of tris(trimethylsiloxy)silylpropyl methacrylate ("$Si_1$" hereinafter), 41.5 % of hexafluoroisopropyl methacrylate ("6F" hereinafter), 10.5 % of methyl methacrylate ("MMA" hereinafter), 11.6 % of methacrylic acid ("MA" hereinafter), 4.4 % of N,N-dimethylacrylamide ("DX" hereinafter), and 4.3 % of 2-hydroxy-1,3-dimethacryloxypropane ("HDMP" hereinafter) were mixed together. And as a polymerization initiator, 0.5 %, based on the total monomer weight, of asoisobutyronitrile ("AIBN" hereinafter) was added to the mixture, and a homogeneous mixture was formed. Thereafter, the mixture was poured into a tube made of polyethylene, and the tube was closed. And, the temperature of the mixture was continuously elevated as follows: The tube was kept in a constant-temperature water bath at 42.5°C for 72 hours. It was further temperature-increased continuously in a hot air dryer from 42.5 to 60°C for 14 hours, and then from 60 to 80°C for 10 hours. Thereafter it was kpet at 80°C for 10 hours, further temperature-increased from 80 to 100°C for 5 hours and kept at 100°C for 10 hours. Finally it was temperature-increased from 100 to 125°C for 10 hours.

The resultant copolymer was colorless, transparent and optically uniform, and it also had excellent machinability in cutting, polishing, etc. The copolymer was measured for physical properties to show an oxygen permeability coefficient of 39 x $10^{-11}$ [$mlO_2$(STP)cm/$cm^2$·sec·mmHg] and a shock resistance index of 88. It was thus found that the copolymer was a contact lens material having good oxygen permeability and excellent shock resistance.

[Examples 2 - 33]

The procedures of Example 1 were repeated by the use of the monomer composition shown in Table 1 in amounts shown in Table 1, whereby copolymers in these Examples were obtained. Each copolymer was measured for an oxygen permeability coefficient and a shock resistance index. Table 1 shows the results.

[Comparative Examples]

The procedures of Example 1 were repeated by the use of the monomer composition shown in Table 1 in amounts shown in Table 1, whereby copolymers in these Comparative Examples were obtained. Each copolymer was measured for physical properties in the same manner as in Example 1. Table 1 shows the results.

In addition, the abbreviations used in Examples and Comparative Examples stand for the following compounds.

| | |
|---|---|
| SIOL: | siloxane oligomer |
| S-1: | oligomer of the formula (I) in which $R_2$ = H, k = 3, ℓ = 1, m = 3, and n = 12. |
| S-2: | oligomer of the formula (I) in which $R_2$ = H, ℓ = 0, m = 0, and n = 12. |
| S-3: | oligomer of the formula (I) in which $R_2$ = $CH_3$, k = 3, ℓ = 1, m = 3, and n = 13. |
| S-4: | oligomer of the formula (I) in which $R_2$ = H, k = 3, ℓ = 1, m = 3, and n = 21. |
| S-5: | oligomer of the formula (I) in which $R_2$ = H, k = 3, ℓ = 1, m = 3, and n = 55. |
| S-Z: | oligomer of the formula (III) in which $R_3$ = (b), $R_2$ = H, and t = 13. |
| Si(M)A: | siloxanyl (meth)acrylate |
| $Si_1$: | tris(trimethylsiloxy)silylpropyl methacrylate |
| $Si_2$: | bis(trimethylsiloxy)methylsilylpropyl methacrylate |
| $Si_3$: | trimethylsiloxydimethylsilylpropyl methacrylate |
| $Si_4$: | pentamethyldisiloxanylmethyl methacrylate |
| F(M)A: | fluorine-containing methacrylate |
| 6F: | hexafluoroisopropyl methacrylate |
| 3F: | 2,2,2-trifluoroethyl methacrylate |
| FOMA: | perfluorooctylethyloxypropylene methacrylate |
| FOIMA: | perfluorooctylethyloxyisopropylene methacrylate |
| FOEMA: | perfluorooctylethyloxyethylene methacrylate |
| R(M)A: | alkyl (meth)acrylate |
| MMA: | methyl methacrylate |
| IPMA: | isopropyl methacrylate |
| CHMA: | cyclohexyl methacrylate |
| MA: | methacrylic acid |
| DX: | N,N-dimethylacrylamide |
| HDMP: | 2-hydroxy-1,3-dimethacryloxypropane |
| TMPT: | trimethylolpropane trimethacrylate |
| 1G: | ethylene glycol dimethacrylate |
| 3G: | triethylene glycol dimethacrylate |

Table 1

| MONOMER COMPOSITION (wt.%) | | Examples 1 | 2 | 3 | 4 | 5 | 6 | 7 | 8 | 9 | 10 | 11 |
|---|---|---|---|---|---|---|---|---|---|---|---|---|
| SIOL | S-1 | 8.6 | 8.8 | 8.7 | | | | 8.7 | 11 | 3 | | 5 |
| | S-2 | | | | | 8.7 | | | | | | |
| | S-3 | | | | | | 8.7 | | | | | |
| | S-4 | | | | 8.7 | | | | | | | |
| | S-5 | | | | | | | | | | 5.8 | |
| | S-Z(*1) | | | | | | | | | | | |
| Si(M)A | $Si_1$ | 19.1 | 19.5 | 20 | 20 | 20 | 19.7 | 19.7 | 17 | 25 | 22 | 30 |
| | $Si_2$ | | | | | | | | | | | |
| | $Si_3$ | | | | | | | | | | | |
| | $Si_4$ | | | | | | | | | | | |
| F(M)A | 6F | 41.5 | 42.4 | 43 | 43 | 43 | 37 | 37 | 35 | 34 | 37.5 | |
| | 3F | | | | | | 13 | 13 | 10 | 13 | 7 | 40 |
| | FOMA | | | | | | | | | | | |
| | FOIMA | | | | | | | | | | | |
| | FOEMA | | | | | | | | | | | |
| R(M)A | MMA | 10.5 | 10.6 | 11 | 11 | 11 | 4.3 | 4.3 | 14.5 | 12 | 12 | 12 |
| | IPMA | | | | | | | | | | | |
| | CHMA | | | | | | | | | | | |
| Hydrophilic monomer | MA | 11.6 | 9.8 | 8.7 | 8.7 | 8.7 | 8.7 | 8.7 | 5.3 | 6 | 8.7 | 5 |
| | DX | 4.4 | 4.5 | 4.3 | 4.3 | 4.3 | 4.3 | 4.3 | 3.7 | 4 | 4.5 | 5 |
| Cross-linking monomer | HDMP | 4.3 | 4.4 | 4.3 | 4.3 | 4.3 | 4.3 | 4.3 | 3.5 | 3 | 2.5 | |
| | TMPT | | | | | | | | | | | |
| | 1G | | | | | | | | | | | 3 |
| | 3G | | | | | | | | | | | |
| PHYSICAL PROPERTIES | | | | | | | | | | | | |
| Oxygen permeability coefficient (*2) | | 39 | 40 | 38 | 37 | 40 | 38 | 37 | 35 | 44 | 43 | 42 |
| Shock resistance index | | 88 | 85 | 82 | 84 | 85 | 87 | 85 | 84 | 81 | 83 | 81 |

*1: conventional siloxane oligomer

*2: x $10^{-11}$ [$mlO_2$(STP)cm/$cm^2$·sec·mmHg]

(to be continued)

Table 1 (continued)

| MONOMER COMPOSITION (wt.%) | | 12 | 13 | 14 | 15 | 16 | 17 | 18 | 19 | 20 | 21 | 22 |
|---|---|---|---|---|---|---|---|---|---|---|---|---|
| | | Examples | | | | | | | | | | |
| SIOL | S-1 | 5 | 5 | 9 | 10 | | 8 | | 2 | 8 | 9 | 8 |
| | S-2 | | | | | | | | | | | |
| | S-3 | | | | | 1 | | | | | | |
| | S-4 | | | | | | | 15 | | | | |
| | S-5 | | | | | | | | | | | |
| | S-Z(*1) | | | | | | | | | | | |
| Si(M)A | $Si_1$ | 25 | 22 | 25 | 25 | 25 | 31 | 15 | 45 | 30 | 40 | 31 |
| | $Si_2$ | | | | | | | | | | | |
| | $Si_3$ | | | | | | | | | | | |
| | $Si_4$ | | | | | | | | | | | |
| F(M)A | 6F | | 38 | 49 | 50 | | | | | | | |
| | 3F | 50 | | | | | | | | | | |
| | FOMA | | | | | 23 | 33 | 50 | 10 | 30 | 19 | |
| | FOIMA | | | | | | | | | | | 30 |
| | FOEMA | | | | | | | | | | | |
| R(M)A | MMA | | 15 | | 10 | 25 | 15 | 8 | 28 | 16 | 20 | 16 |
| | IPMA | | | | | | | | | | | |
| | CHMA | | | | | | | | | | | |
| Hydrophilic monomer | MA | 10 | 10 | 12 | | 9 | 8 | 8 | 9 | 8 | 4 | 8 |
| | DX | 5 | | | | 5 | 5 | 4 | 4.5 | 4 | 2 | 4 |
| Cross-linking monomer | HDMP | | | 5 | | | | | | | 6 | |
| | TMPT | | 10 | | 5 | | | | | 4 | | 3 |
| | 1G | 5 | | | | | | | 1.5 | | | |
| | 3G | | | | | | | | | | | |
| PHYSICAL PROPERTIES | | | | | | | | | | | | |
| Oxygen permeability coefficient (*2) | | 42 | 51 | 59 | 52 | 37 | 40 | 49 | 35 | 40 | 36 | 41 |
| Shock resistance index | | 82 | 76 | 75 | 78 | 76 | 77 | 60 | 78 | 84 | 80 | 85 |

*1: conventional siloxane oligomer

*2: x $10^{-11}$ [ml$O_2$(STP)cm/cm$^2$·sec·mmHg]

(to be continued)

Table 1 (continued)

| MONOMER COMPOSITION (wt.%) | | Examples 23 | 24 | 25 | 26 | 27 | 28 | 29 | 30 | 31 | 32 | 33 |
|---|---|---|---|---|---|---|---|---|---|---|---|---|
| SIOL | S-1 | 8 | | 8 | 7 | 3 | 5 | 8 | 9 | 8 | | 7 |
| | S-2 | | | | | | | | | | | |
| | S-3 | | 9 | | | | | | | | 7.5 | |
| | S-4 | | | | | | | | | | | |
| | S-5 | | | | | | | | | | | |
| | S-Z(*1) | | | | | | | | | | | |
| Si(M)A | $Si_1$ | 35 | 30 | 32 | 40 | 32 | 32 | 25 | | | | 23.5 |
| | $Si_2$ | | | | | | | | 20 | | | |
| | $Si_3$ | | | | | | | | | 25 | | |
| | $Si_4$ | | | | | | | | | | 30 | |
| F(M)A | 6F | | | | | | | 25 | | 34.5 | | 20 |
| | 3F | | | | | | | | 25 | | 35 | |
| | FOMA | | 31 | 25 | | | | | | | | |
| | FOIMA | 20 | | | | 30 | 29 | 10 | 15 | | | |
| | FOEMA | | | | 20 | | | | | | | 15 |
| R(M)A | MMA | 20 | | | 18 | 22 | 21 | 17 | | | | 20 |
| | IPMA | | 15 | | | | | | | 15 | | |
| | CHMA | | | 17 | | | | | 15 | | 10.5 | |
| Hydrophilic monomer | MA | 9 | 9 | 11 | 10 | 8 | 8 | 8 | 9 | 9 | 9 | 8 |
| | DX | 5 | 3 | 3 | 3 | 2.5 | 2.5 | 3 | 3 | 4 | 4.5 | 3.5 |
| Cross-linking monomer | HDMP | | | | | | | 4 | | | | |
| | TMPT | | | | | | | | | 4.5 | | 3 |
| | 1G | 3 | 3 | 4 | 2 | | | | 4 | | 3.5 | |
| | 3G | | | | | 2.5 | 2.5 | | | | | |
| PHYSICAL PROPERTIES | | | | | | | | | | | | |
| Oxygen permeability coefficient (*2) | | 38 | 49 | 47 | 39 | 40 | 43 | 35 | 33 | 40 | 34 | 34 |
| Shock resistance index | | 81 | 80 | 79 | 79 | 82 | 81 | 78 | 80 | 82 | 85 | 86 |

*1: conventional siloxane oligomer
*2: x $10^{-11}$ [$mlO_2$(STP)cm/$cm^2$·sec·mmHg]

(to be continued)

Table 1 (continued)

| MONOMER COMPOSITION (wt.%) | | Comparative Examples 1 | 2 | 3 | 4 | 5 | 6 | 7 | 8 |
|---|---|---|---|---|---|---|---|---|---|
| SIOL | S-1 | | | | | | | | |
| | S-2 | | | | | | | | |
| | S-3 | | | | | | | | |
| | S-4 | | | | | | | | |
| | S-5 | | | | | | | | |
| | S-Z(*1) | 5 | 5 | 5 | 7 | 10 | | | 4.8 |
| Si(M)A | $Si_1$ | 30 | 25 | 22 | 43 | 30 | 24 | 21.9 | 19 |
| | $Si_2$ | | | | | | | | |
| | $Si_3$ | | | | | | | | |
| | $Si_4$ | | | | | | | | |
| F(M)A | 6F | | | 38 | | | 56 | 65.8 | 28.6 |
| | 3F | 40 | 50 | | 43 | 45 | | | |
| | FOMA | | | | | | | | |
| | FOIMA | | | | | | | | |
| | FOEMA | | | | | | | | |
| R(M)A | MMA | 12 | | 15 | | 10 | 8 | | 28.6 |
| | IPMA | | | | | | | | |
| | CHMA | | | | | | | | |
| Hydrophilic monomer | MA | 5 | 10 | 10 | 5 | | 8 | 8.8 | 9.5 |
| | DX | 5 | 5 | | | | | 1.75 | |
| Cross-linking monomer | HDMP | | | | | | 4 | 1.75 | |
| | TMPT | | | 10 | | 5 | | | 9.5 |
| | 1G | 3 | 5 | | 2 | | | | |
| | 3G | | | | | | | | |
| PHYSICAL PROPERTIES | | | | | | | | | |
| Oxygen permeability coefficient (*2) | | 45 | 42 | 49 | 55 | 40 | 60 | 67 | 21 |
| Shock resistance index | | 64 | 62 | 63 | 60 | 67 | 55 | 40 | 70 |

*1: conventional siloxane oligomer
*2: x $10^{-11}$ [$mlO_2$(STP)cm/$cm^2$·sec·mmHg]

As is clearly shown in Table 1, all the copolymers obtained in Examples 1 to 33, each of which contained the siloxane oligomer, S-1 [oligomer of the formula (I) in which $R_2$ = H, k = 3, $\ell$ = 1, m = 3, and n = 12], S-2 [oligomer of the formula (I) in which $R_2$ = H, $\ell$ = 0, m = 0, and n = 12], S-3 [oligomer of the formula (I) in which $R_2$ = $CH_3$, k = 3, $\ell$ = 1, m = 3, and n = 13], S-4 [oligomer of the formula (I) in which $R_2$ = H, k = 3, $\ell$ = 1, m = 3, and n = 21], or S-5 [oligomer of the formula (I) in which $R_2$ = H, k = 3, $\ell$ = 1, m = 3, and n = 55], exhibited a higher shock resistance index than the copolymers obtained in Comparative Examples 1 to 5, each of which contained a conventional siloxane oligomer, S-Z [oligomer of the formula (III) in which $R_3$ = (b), $R_2$ = H and t = 13]. Further, the copolymers obtained in Examples 1 to 33 had an excellent oxygen permeation coefficient.

Further, in the present invention, the contact lens materials obtained in Examples, each of which contained the alkyl (meth)acrylate and/or the hydrophilic monomer and/or the crosslinking monomer exhibited a synergistic effect of these incorporated monomers and had superior advantages (e.g. hardness, water wettability, etc. ). And, all the contact lens materials obtained in Examples were simultaneously excellent in many properties.

As detailed above, due to the use of the specified siloxane oligomer, the contact lens material according to the present invention can give a contact lens which has both oxygen permeability necessary for actually fitting it on and excellent shock resistance over conventional contact lenses. Therefore, according to the present invention, the occurrence rate of destruction of lenses in handling can be decreased and the durability of lenses can be increased. As a result, the safety and economic advantages of contact lenses can be improved, and the contact lens material and the contact lens of the present invention is very useful in practical use.

## Claims

### Claims for the following Contracting States : DE, FR, GB, NL

1. A contact lens material comprising a copolymer obtained from a monomer mixture containing, as an essential component. a siloxane oligomer of the following formula (I) and/or a siloxane oligomer of the following formula (II).

(I)

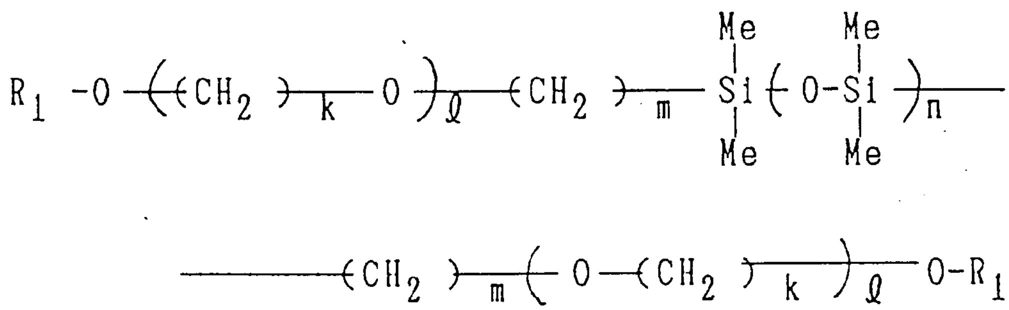

[wherein k is an integer of 1 to 3, ℓ is 0 or 1, m is an integer of 0 to 3, n is an integer of 9 to 199, Me is $CH_3$, and $R_1$ is

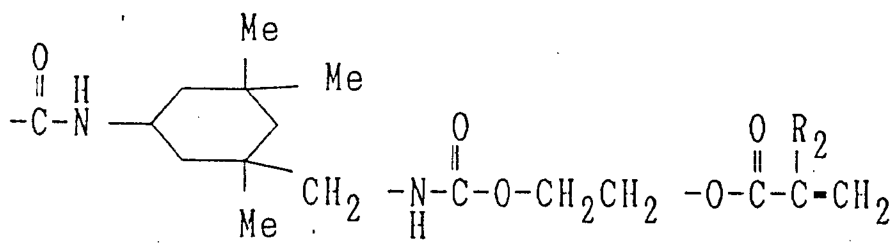

(in which $R_2$ is H or Me)].

(II)

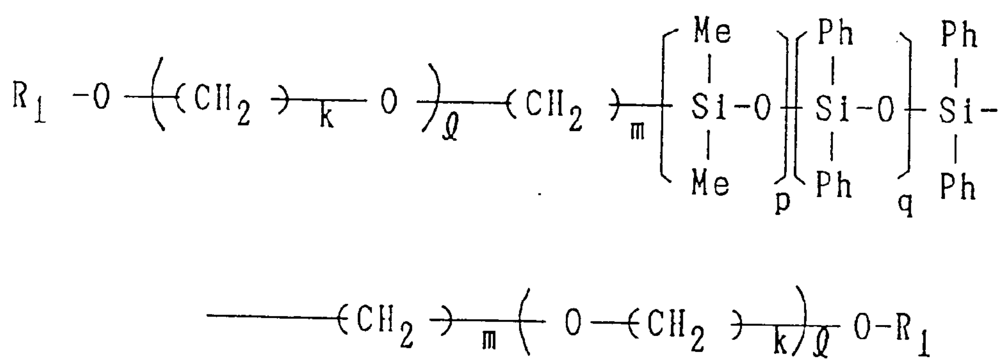

[wherein k is an integer of 1 to 3, ℓ is 0 or 1, m is an integer of 0 to 3, p+q is an integer of 11 to 139 (provided that p≧0 and q≧0), Me is $CH_3$, Ph is

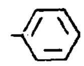 ,

and $R_1$ is as defined in the formula (I)].

2. A contact lens material according to claim 1, wherein the siloxane oligomer of the formula (I) or the formula (II) has a molecular weight of 800 to 6,000.

3. A contact lens material according to claim 1, wherein the monomer mixture for the copolymer contains 0.1 to 15 %. by weight of the siloxane oligomer of the formula (I) and/or the siloxane oligomer of the formula (II).

4. A contact lens material according to claim 1, wherein the monomer mixture for the copolymer is a mixture which contains, as an essential component, at least one fluorine-containing (meth)acrylate and at least one siloxanyl (meth)acrylate.

5. A contact lens formed by processing a copolymer obtained from a monomer mixture containing, as an essential component, a siloxane oligomer of the following formula (I) and/or a siloxane oligomer of the following formula (II),

(I)

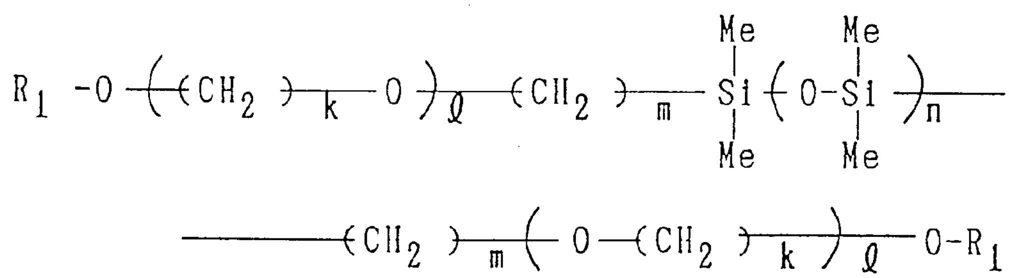

[wherein k is an integer of 1 to 3, ℓ is 0 or 1, m is an integer of 0 to 3, n is an integer of 9 to 199, Me is $CH_3$, and $R_1$ is

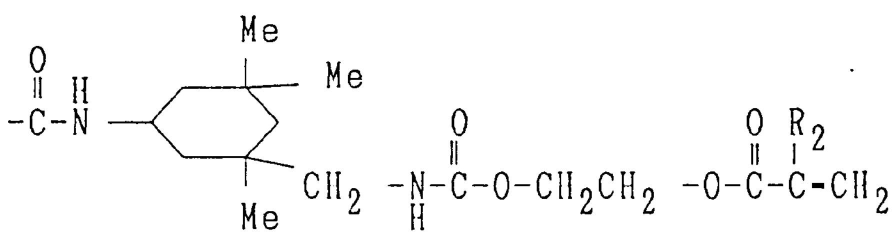

(in which $R_2$ is H or Me)].

(II)

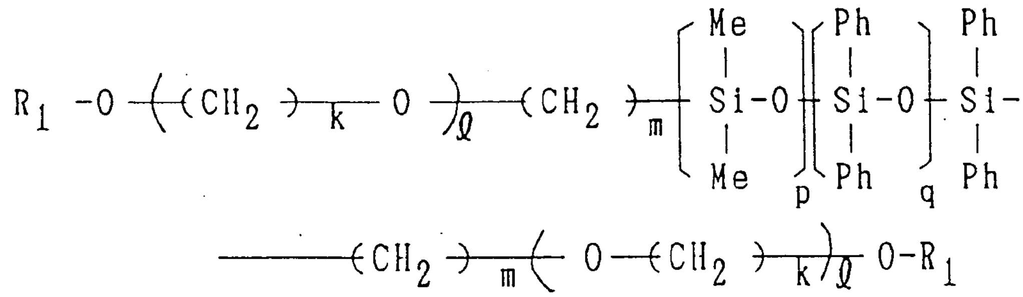

[wherein k is an integer of 1 to 3, ℓ is 0 or 1, m is an integer of 0 to 3, p+q is an integer of 11 to 139 (provided that $p \geqq 0$ and $q \geqq 0$), Me is $CH_3$, Ph is

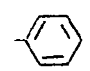 ,

and $R_1$ is as defined in the formula (I)].

6. A contact lens according to claim 5, wherein the siloxane oligomer of the formula (I) or the formula (II) has a molecular weight of 800 to 6,000.

7. A contact lens according to claim 5, wherein the monomer mixture for the copolymer contains 0.1 to 15 % by weight of the siloxane oligomer of the formula (I) and/or the siloxane oligomer of the formula (II).

8. A contact lens according to claim 5, wherein the monomer mixture for the copolymer is a mixture which contains, as an essential component, at least one fluorine-containing (meth)acrylate and at least one siloxanyl (meth)acrylate.

**Claims for the following Contracting State : ES**

1. A process for preparing a contact lens material, comprising a copolymer obtained from a monomer mixture containing, as an essential component, a siloxane oligomer of the following formula (I) and/or a siloxane oligomer of the following formula (II),

(I)

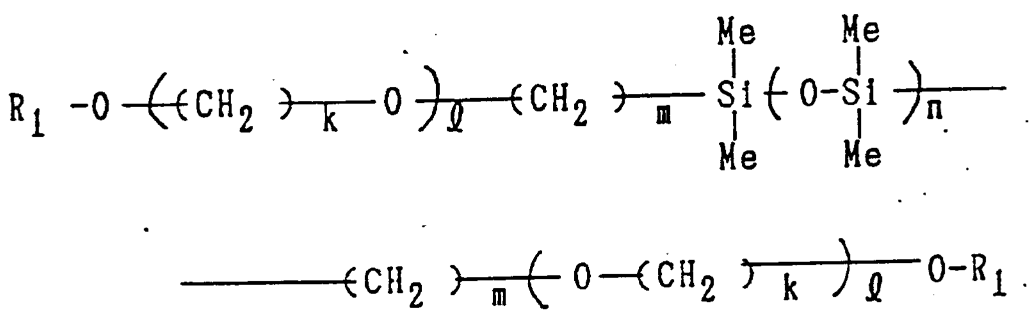

[wherein k is an integer of 1 to 3, ℓ is 0 or 1, m is an integer of 0 to 3. n is an integer of 9 to 199, Me is $CH_3$, and $R_1$ is

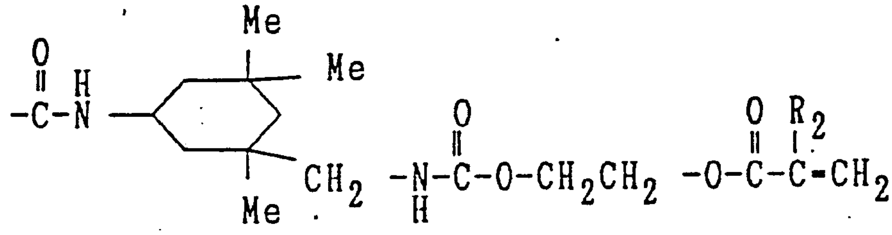

(in which $R_2$ is H or Me)].

(II)

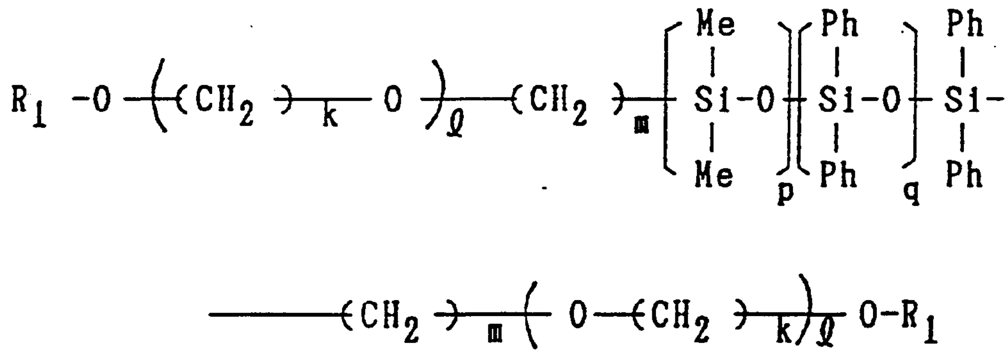

[wherein k is an integer of 1 to 3, $\ell$ is 0 or 1, m is an integer of 0 to 3. p+q is an integer of 11 to 139 (provided that p≧0 and q≧0), Me is $CH_3$, Ph is

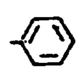 ,

and $R_1$ is as defined in the formula (I) ,
by homogeneously mixing said monomer component, casting the resultant mixture into a mold, closing the mold, elevating the temperature in a constant-temperature bath stepwise or continously in the temperature range between 25°C and 150°C and completing the polymerization approximately for 5 to 144 hours.

2. A process according to claim 1, wherein the polymerization is carried out after an inert gas is substituted for air in the solution and the mold is closed.

3. A process according to claim 1 or 2, wherein the siloxane oligomer of the formula (I) or the formula (II) has a molecular weight of 800 to 6000.

4. A process according to any one of the claims 1 to 3, wherein the monomer mixture for the copolymer contains 0.1 to 15% by weight of the siloxane oligomer of the formula (I) and/or the siloxane oligomer of the formula (II).

5. A process according to any one of the claims 1 to 3, wherein the monomer mixture for the copolymer is a mixture which contains, as an essential component, at least one fluorine containing (meth)acrylate and at least one siloxanyl (meth)acrylate.

6. A process for preparing a contact lens from a contact lens material obtainable according to a process of any one of the claims 1 to 5 by finishing said contact lens material into the form of a lens by a contact lens processing method.

7. A process according to claim 6 wherein said contact lens processing method is conducted by mechanical processing procedures selected from cutting and/or polishing.

8. A process for preparing a contact lens from a contact lens material obtainable according to a process of any one of the claims 1 to 5 by casting the monomer mixture as defined in claim 1, into a mold having a predetermined radius of curvature, and forming the monomer mixture into a lens.

9. A contact lens material comprising a copolymer obtained from a monomer mixture containing. as an essential component. a siloxane oligomer of the following formula (I) and/or a siloxane oligomer of the following formula (II),

(I)

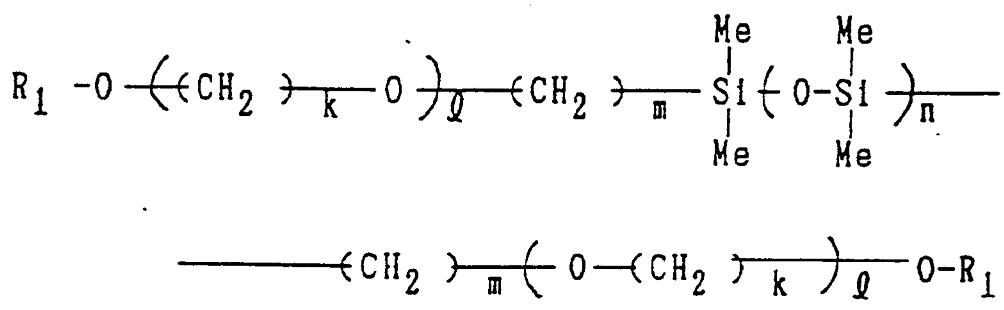

[wherein k is an integer of 1 to 3, ℓ is 0 or 1, m is an integer of 0 to 3, n is an integer of 9 to 199. Me is $CH_3$, and $R_1$ is

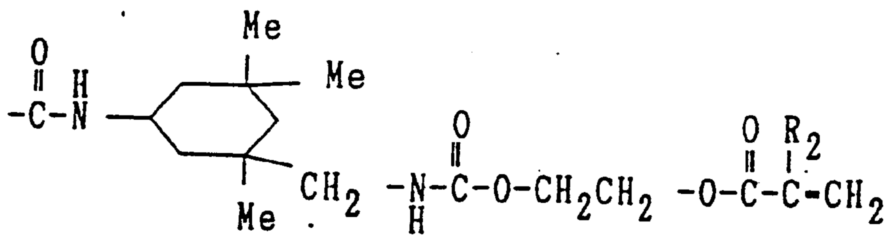

(in which $R_2$ is H or Me)].

(II)

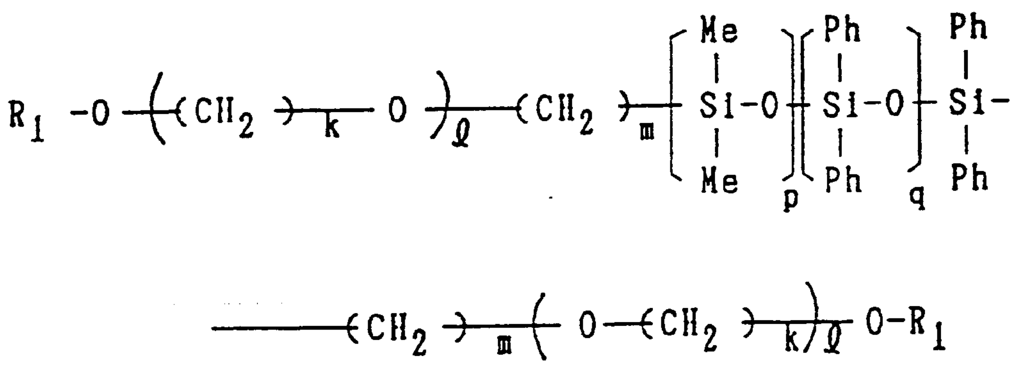

[wherein k is an integer of 1 to 3, ℓ is 0 or 1, m is an integer of 0 to 3, p+q is an integer of 11 to 139 (provided that p≧0 and q≧0), Me is $CH_3$, Ph is

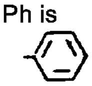 ,

and $R_1$ is as defined in the formula (I)].

10. A contact lens formed by processing a copolymer obtained from a monomer mixture containing. as an essential component. a siloxane oligomer of the following formula (I) and/or a siloxane oligomer of the following formula (II).

(I)

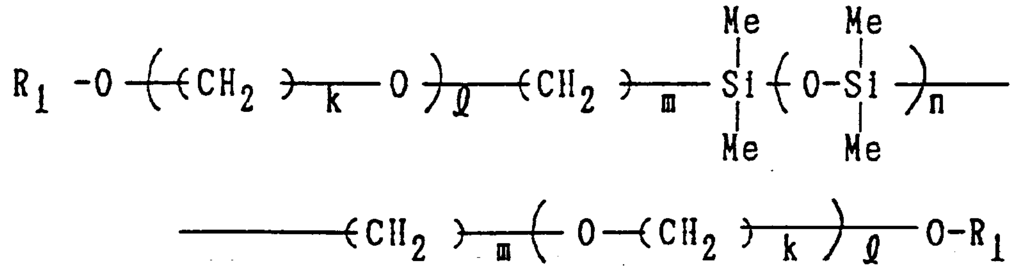

[wherein k is an integer of 1 to 3, ℓ is 0 or 1, m is an integer of 0 to 3, n is an integer of 9 to 199, Me is $CH_3$, and $R_1$ is

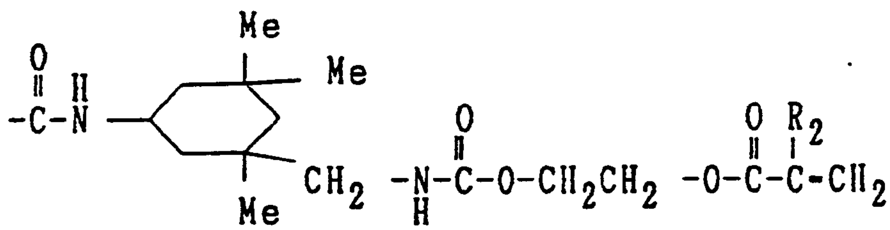

(in which $R_2$ is H or Me)].

(II)

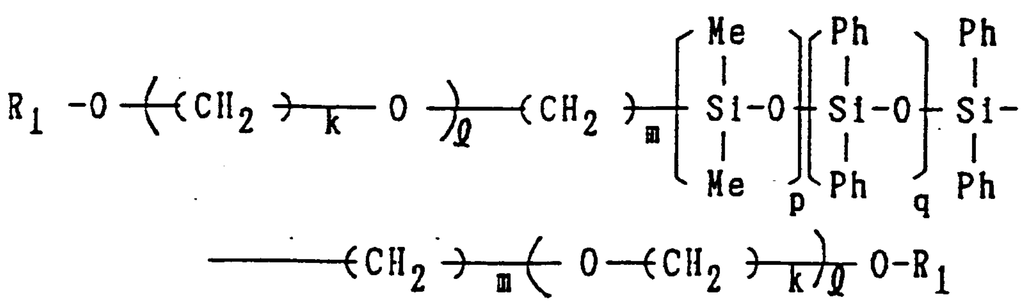

[wherein k is an integer of 1 to 3, ℓ is 0 or 1, m is an integer of 0 to 3. p+q is an integer of 11 to 139 (provided that $p \geqq 0$ and $q \geqq 0$), Me is $CH_3$, Ph is

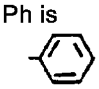 .

and $R_1$ is as defined in the formula (I)].

## Patentansprüche

### Patentanspüche für folgende Vertragsstaaten : DE, FR, GB, NL

1. Kontaktlinsenmaterial, umfassend ein Copolymer, das erhalten wird aus einer Monomerenmischung, die als wesentliche Komponente ein Siloxanoligomer der folgenden Formel (I) und/oder ein Siloxanoligomer der folgenden Formel (II) enthält

(I)

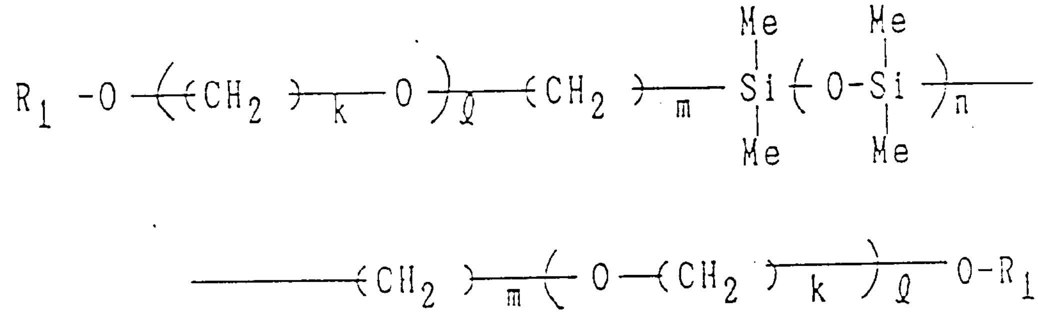

[worin k eine ganze Zahl von 1 bis 3 ist, ℓ 0 oder 1 ist, m eine ganze Zahl von 0 bis 3 ist, n eine ganze Zahl von 9 bis 199 ist, Me $CH_3$ ist und $R_1$

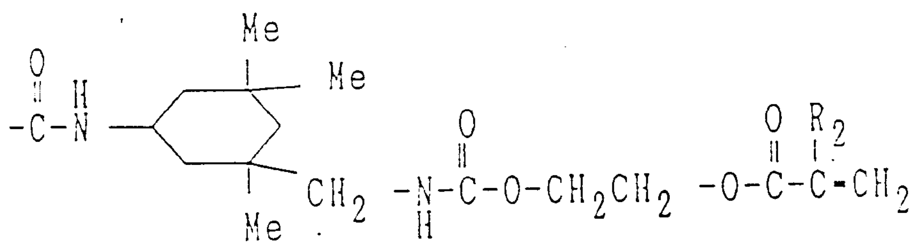

ist (worin $R_2$ H oder Me ist)].

(II)

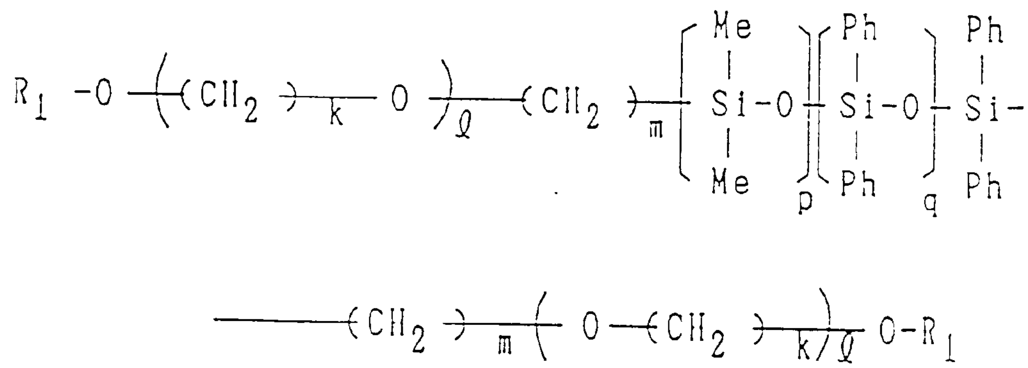

[worin k eine ganze Zahl von 1 bis 3 ist, ℓ 0 oder 1 ist, m eine ganze Zahl von 0 bis 3 ist, p+q eine ganze Zahl von 11 bis 139 ist (vorausgesetzt, daß p≧0 und q≧0), Me $CH_3$ ist, Ph

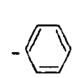

ist, und $R_1$ wie in Formel (I) definiert ist.]

2. Kontaktlinsenmaterial gemäß Anspruch 1, worin das Siloxanoligomer der Formel (I) oder der Formel (II) ein Molekulargewicht von 800 bis 6000 hat.

3. Kontaktlinsenmaterial gemäß Anspruch 1, worin die Monomerenmischung für das Copolymer 0,1 bis 15 Gew.-% Siloxanoligomer der Formel (I) und/oder Siloxanoligomer der Formel (II) enthält.

4. Kontaktlinsenmaterial gemäß Anspruch 1, worin die Monomerenmischung für das Copolymer eine Mischung ist, die als wesentliche Komponente mindestens ein fluorhaltiges (Meth)acrylat und mindestens ein Siloxanyl(meth)acrylat enthält.

5. Kontaktlinse, gebildet durch Verarbeitung eines Copolymers, das aus einer Monomerenmischung erhalten wird, die als wesentliche Komponente ein Siloxanoligomer der folgenden Formel (I) und/oder ein Siloxanoligomer der folgenden Formel (II) enthält,

(I)

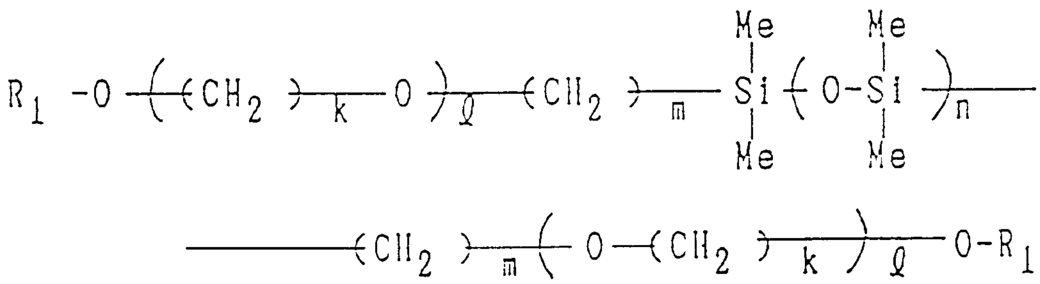

[worin k eine ganze Zahl von 1 bis 3 ist, ℓ 0 oder 1 ist, m eine ganze Zahl von 0 bis 3 ist, n eine ganze Zahl von 9 bis 199 ist, Me $CH_3$ ist und
$R_1$

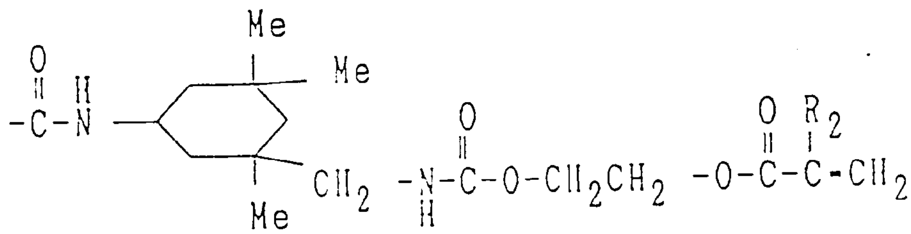

ist (worin $R_2$ H oder Me ist)].

(II)

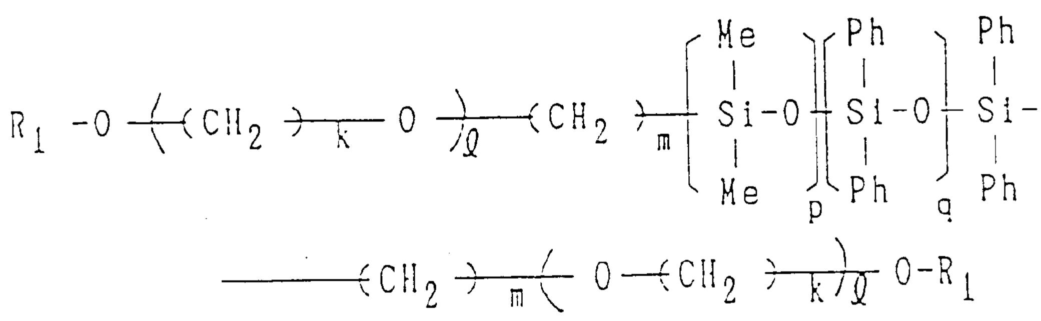

[worin k eine ganze Zahl von 1 bis 3 ist, ℓ 0 oder 1 ist, m eine ganze Zahl von 0 bis 3 ist, p+q eine ganze Zahl von 11 bis 139 ist (vorausgesetzt, daß n≧0 und q≧0), Me $CH_3$ ist, Ph

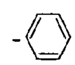

ist, und $R_1$ wie in Formel (I) definiert ist.]

6. Kontaktlinse gemäß Anspruch 5, worin das Siloxanoligomer der Formel (I) oder der Formel (II) ein Molekulargewicht von 800 bis 6000 hat.

7. Kontaktlinse gemäß Anspruch 5, worin die Monomerenmischung für das Copolymer 0,1 bis 15 Gew.-% des Siloxanoligomers der Formel (I) und/oder des Siloxanoligomers der Formel (II) enthält.

8. Kontaktlinse gemäß Anspruch 5, worin die Monomerenmischung für das Copolymer eine Mischung ist, die als wesentliche Komponente mindestens ein fluorhaltiges (Meth)acrylat und mindestens ein Siloxanyl(meth)acrylat enthält.

**Patentanspüche für folgenden Vertragsstaat : ES**

1. Verfahren zur Herstellung eines Kontaktlinsenmaterials, umfassend ein Copolymer, das erhalten wird aus einer Monomerenmischung, die als wesentliche Komponente ein Siloxanoligomer der folgenden Formel (I) und/oder ein Siloxanoligomer der folgenden Formel (II) enthält

(I)

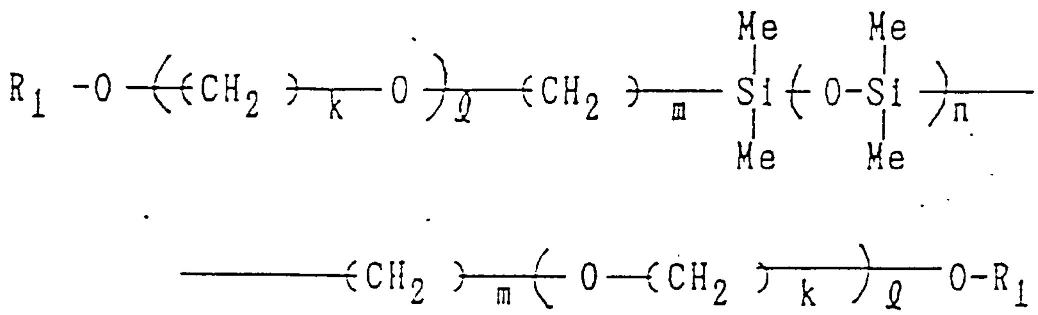

[worin k eine ganze Zahl von 1 bis 3 ist, ℓ 0 oder 1 ist, m eine ganze Zahl von 0 bis 3 ist, n eine ganze Zahl von 9 bis 199 ist, Me $CH_3$ ist und
$R_1$

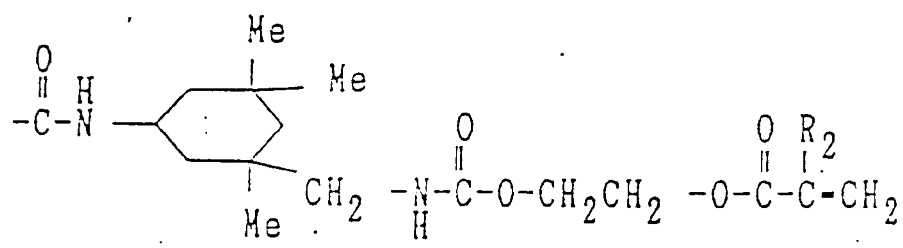

ist, (worin $R_2$ H oder Me ist)].

(II)

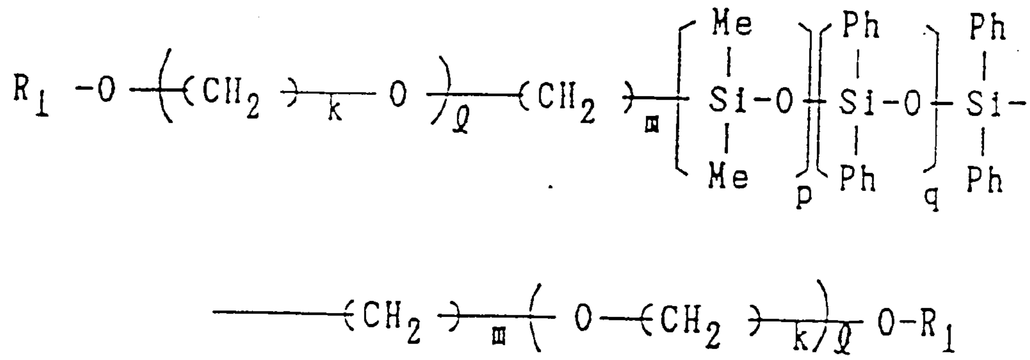

[worin k eine ganze Zahl von 1 bis 3 ist, ℓ 0 oder 1 ist, m eine ganze Zahl von 0 bis 3 ist, p+q eine ganze Zahl von 11 bis 139 ist (vorausgesetzt, daß p≧0 und q≧0), Me $CH_3$ ist, Ph

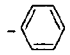

ist, und $R_1$ wie in Formel (I) definiert ist.]
durch homogenes Mischen dieser Monomerkomponente, Gießen der resultierenden Mischung in eine Form, Schließen der Form, schrittweise oder kontinuierliche Erhöhung der Temperatur in einem Bad mit konstanter Temperatur im Temperaturbereich zwischen 25°C und 150°C und Vervollständigung der Polymerisation während ungefähr 5 bis 144 Stunden.

2. Verfahren gemäß Anspruch 1, worin die Polymerisation ausgeführt wird, nachdem die Luft in der Lösung durch ein Inertgas ersetzt und die Form geschlossen wurde.

3. Verfahren gemäß Anspruch 1 oder 2, worin das Siloxanoligomer der Formel (I) oder der Formel (II) ein Molekulargewicht von 800 bis 6000 hat.

4. Verfahren gemäß einem der Ansprüche 1 bis 3, worin die Monomerenmischung für das Copolymer 0,1 bis 15 Gew.-% des Siloxanoligomers der Formel (I) und/oder des Siloxanoligomers der Formel (II) enthält.

5. Verfahren gemäß einem der Ansprüche 1 bis 3, worin die Monomerenmischung für das Copolymer eine Mischung ist, die als wesentliche Komponente mindestens ein fluorhaltiges (Meth)acrylat und mindestens ein Siloxanyl(meth)acrylat enthält.

6. Verfahren zur Herstellung einer Kontaktlinse aus einem Kontaktlinsenmaterial, erhältlich nach einem Verfahren gemäß einem der Ansprüche 1 bis 5, durch Endverarbeitung dieses Kontaktlinsenmaterials in die Form einer Linse durch ein Kontaktlinsenverarbeitungsverfahren.

7. Verfahren gemäß Anspruch 6, wobei dieses Kontaktlinsenverarbeitungsverfahren durch mechanische Verarbeitungsverfahren, ausgewählt aus Schneiden und/oder Polieren, ausgeführt wird.

8. Verfahren zur Herstellung einer Kontaktlinse aus einem Kontaktlinsenmaterial, das nach einem Verfahren gemäß einem der Ansprüche 1 bis 5 erhältlich ist, durch Gießen der Monomerenmischung gemäß Anspruch 1 in eine Form mit einem vorgegebenen Krümmungsradius und Ausbildung der Monomerenmischung zu einer Linse.

9. Kontaktlinsenmaterial, umfassend ein Copolymer, das aus einer Monomerenmischung erhalten wird, die als wesentliche Komponente ein Siloxanoligomer der folgenden Formel (I) und/oder ein Siloxanoligomer der folgenden Formel (II) enthält

(I)

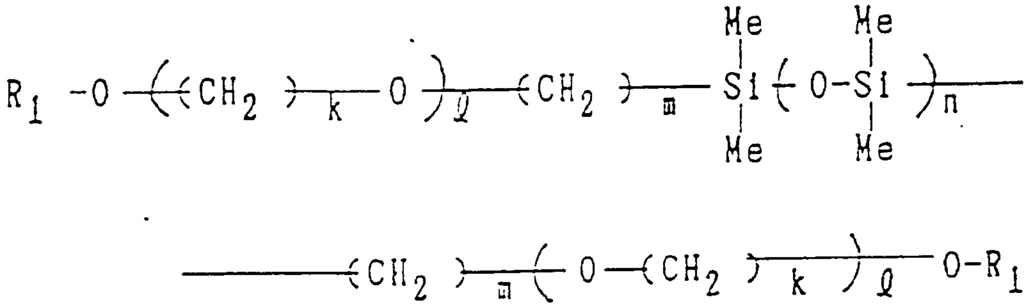

[worin k eine ganze Zahl von 1 bis 3 ist, ℓ 0 oder 1 ist, m eine ganze Zahl von 0 bis 3 ist, n eine ganze Zahl von 9 bis 199 ist, Me $CH_3$ ist und $R_1$

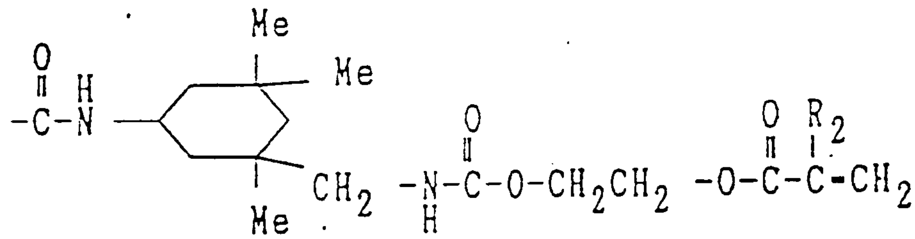

ist, (worin $R_2$ H oder Me ist)].

(II)

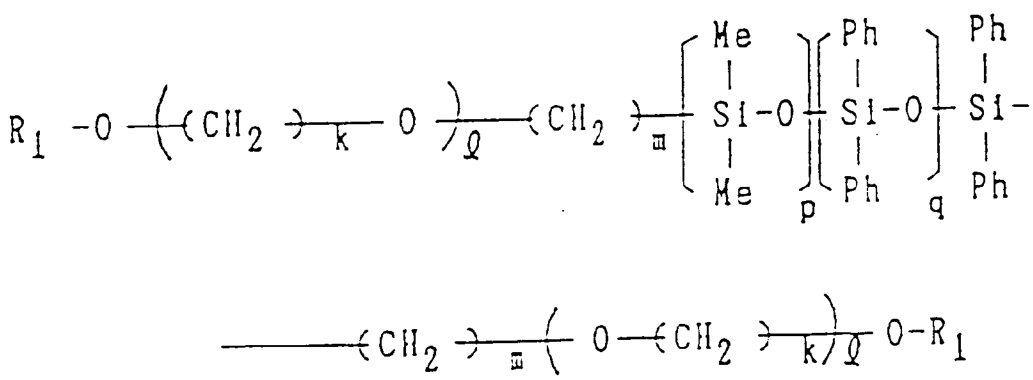

[worin k eine ganze Zahl von 1 bis 3, ist ℓ 0 oder 1 ist, m eine ganze Zahl von 0 bis 3 ist, p+q eine ganze Zahl von 11 bis 139 ist (vorausqesetzt, daß p≧0 und q≧0), Me $CH_3$ ist, Ph

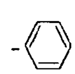

ist, und $R_1$ wie in Formel (I) definiert ist.]

**10.** Kontaktlinse, gebildet durch Verarbeitung eines Copolymers, das erhalten wird aus einer Monomerenmischung, die als wesentliche Komponente ein Siloxanoligomer der folgenden Formel (I) und-/oder ein Siloxanoligomer der folgenden Formel (II) enthält

(I)

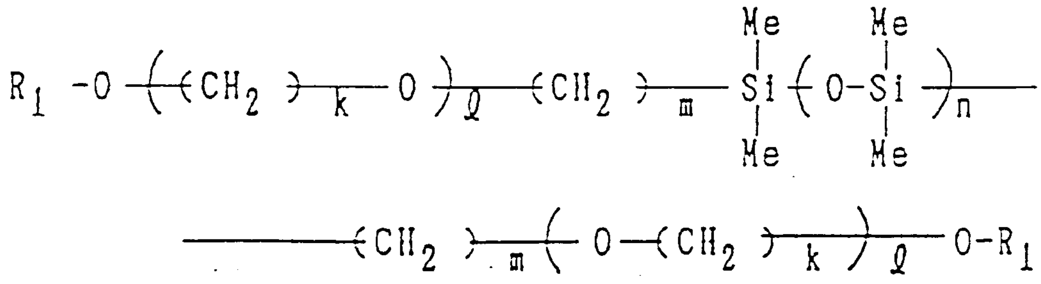

[worin k eine ganze Zahl von 1 bis 3 ist, ℓ 0 oder 1 ist, m eine ganze Zahl von 0 bis 3 ist, n eine ganze Zahl von 9 bis 199 ist, Me $CH_3$ ist und $R_1$

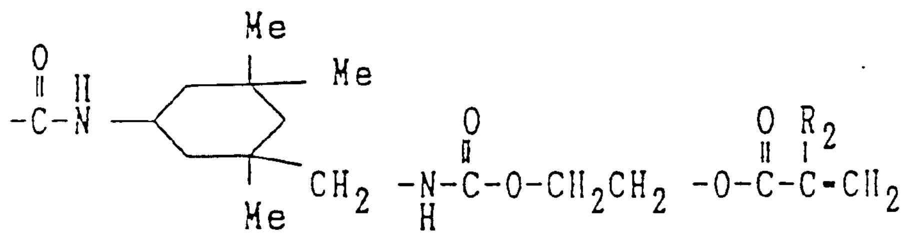

ist, (worin $R_2$ H oder Me ist)].

(II)

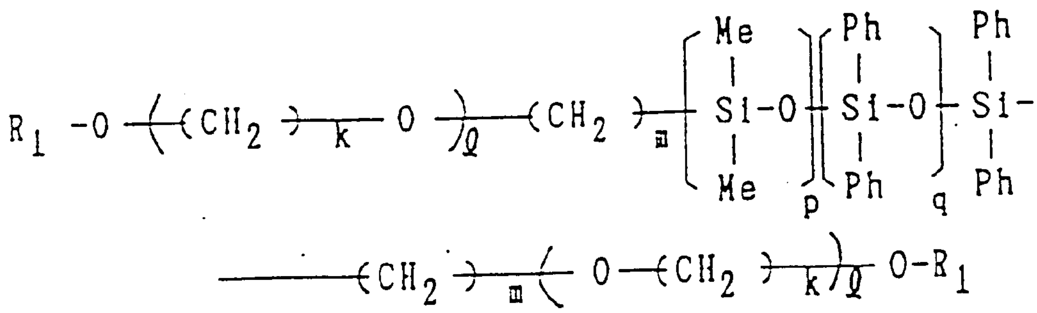

[worin k eine ganze Zahl von 1 bis 3 ist, ℓ 0 oder 1 ist, m eine ganze Zahl von 0 bis 3 ist, p+q eine ganze Zahl von 11 bis 139 ist (vorausgesetzt, daß p≧0 und q≧0), Me $CH_3$ ist, Ph

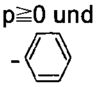

ist, und $R_1$ wie in Formel (I) definiert ist.]

## Revendications

### Revendications pour les Etats contractants suivants : DE, FR, GB, NL

1. Matériau de lentilles de contact comprenant un copolymère obtenu à partir d'un mélange de monomères contenant, comme composant essentiel, un oligomère siloxane de formule suivante (I) et/ou un oligomère siloxane de formule suivante (II),

(I)

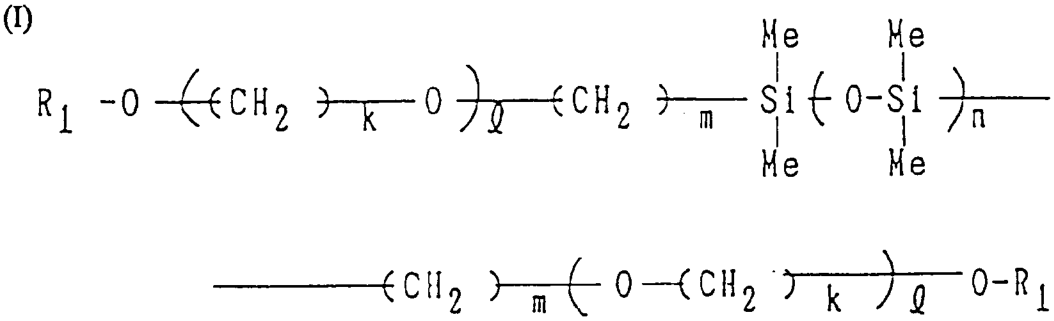

[dans laquelle k est un entier de 1 à 3, l est 0 ou 1, m est un entier de 0 à 3, n est un entier de 9 à 199, Me est $CH_3$, et
$R_1$ est

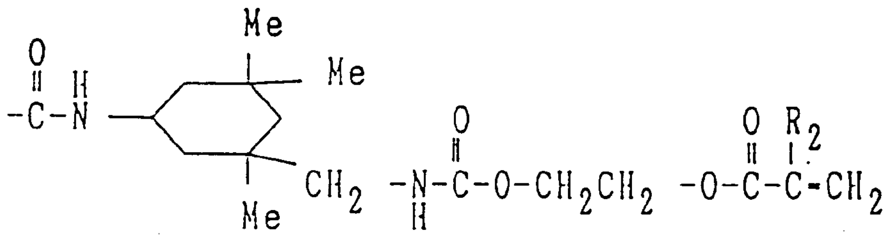

(dans laquelle $R_2$ est H ou Me)].

(II)

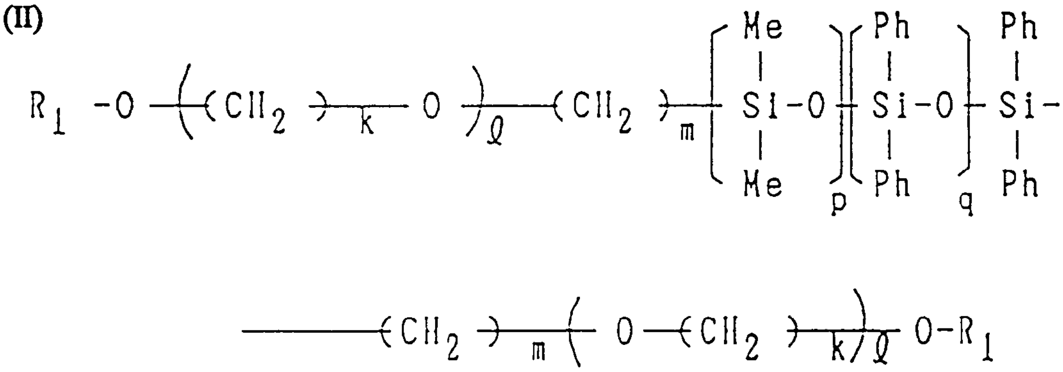

[dans laquelle k est un entier de 1 à 3, l est 0 ou 1, m est un entier de 0 à 3, p + q est un entier de 11 à 139 (à la condition que p ≧ 0 et q ≧ 0), Me est $CH_3$, Ph est

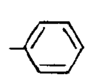 ,

et $R_1$ est tel que défini à la formule (I).]

2. Matériau de lentilles de contact selon la revendication 1, dans lequel l'oligomère siloxane de formule (I) ou de formule (II) a un poids moléculaire de 800 à 6 000.

3. Matériau de lentilles de contact selon la revendication 1, dans lequel le mélange monomère pour réaliser le copolymère contient 0,1 à 15 % en poids de l'oligomère siloxane de formule (I) et/ou de l'oligomère siloxane de formule (II).

4. Matériau de lentilles de contact selon la revendication 1, dans lequel le mélange de monomère pour réaliser le copolymère est un mélange qui contient, comme composants essentiels, au moins un (méth)acrylate contenant du fluor et au moins un (méth)acrylate de siloxanyle.

5. Lentilles de contact réalisées par un traitement d'un copolymère obtenu à partir d'un mélange de monomères contenant comme composant essentiel, un oligomère siloxane de formule suivante (I) et/ou un oligomère siloxane de formule suivante (II),

(I)

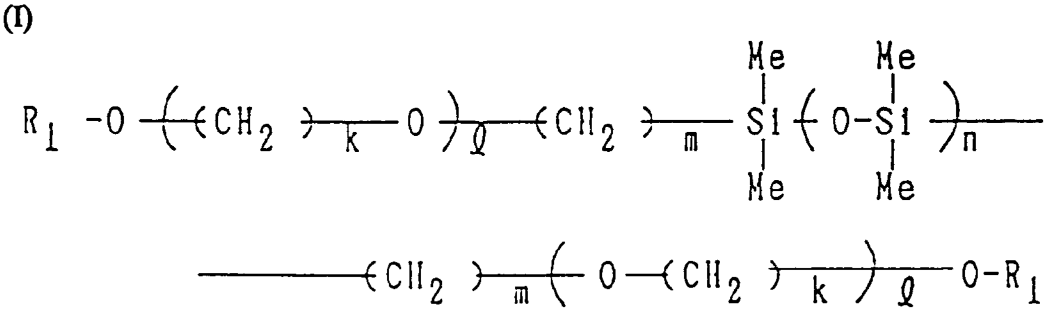

[dans laquelle k est un entier de 1 à 3, l est 0 ou 1, m est un entier de 0 à 3, n est un entier de 9 à 199, Me est $CH_3$, et
$R_1$ est

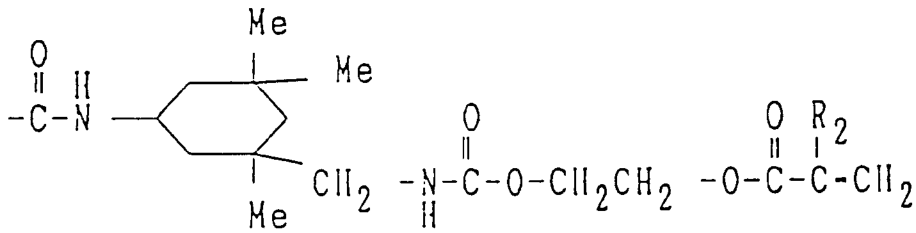

(dans laquelle $R_2$ est H ou Me)].

(II)

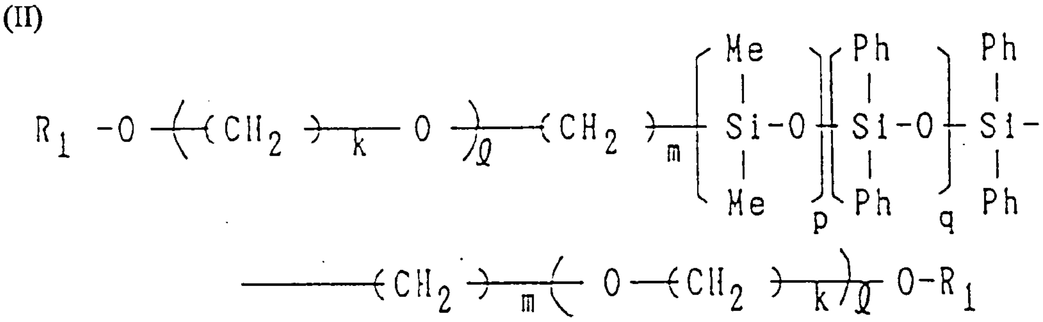

[dans laquelle k est un entier de 1 à 3, l est 0 ou 1, m est un entier de 0 à 3, p + q est un entier de 11 à 139 (à condition que $p \geqq 0$ et $q \geqq 0$), Me est $CH_3$, Ph est

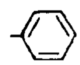 ,

et $R_1$ est tel que défini à la formule (I).]

6. Lentilles de contact selon la revendication 5, dans laquelle l'oligomère siloxane de la formule (I) ou de la formule (II) a un poids moléculaire de 800 à 6 000.

7. Lentilles de contact selon la revendication 5, dans laquelle le mélange monomère pour réaliser le copolymère contient 0,1 à 15 % en poids d'oligomère siloxane de formule (I) et/ou d'oligomère siloxane de formule (II).

8. Lentilles de contact selon la revendication 5, dans laquelle le mélange de monomère pour réaliser le copolymère est un mélange qui contient, comme composants essentiels, au moins un (méth)acrylate contenant du fluor et au moins un (méth)acrylate de siloxanyle.

**Revendications pour l'Etat contractant suivant : ES**

1. Procédé de préparation de matériau de lentilles de contact comprenant un copolymère obtenu à partir d'un mélange de monomères contenant, comme composant essentiel, un oligomère siloxane de formule suivante (I) et/ou un oligomère siloxane de formule suivante (II),

(I)

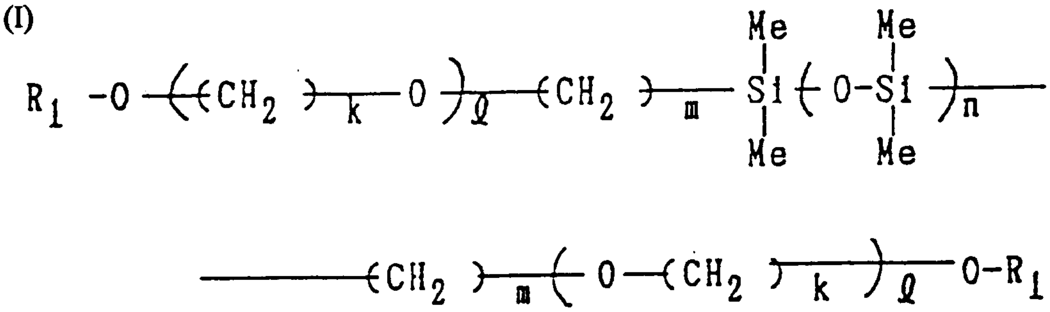

[dans laquelle k est un entier de 1 à 3, l est 0 ou 1, m est un entier de 0 à 3, n est un entier de 9 à 199, Me est $CH_3$, et
$R_1$ est

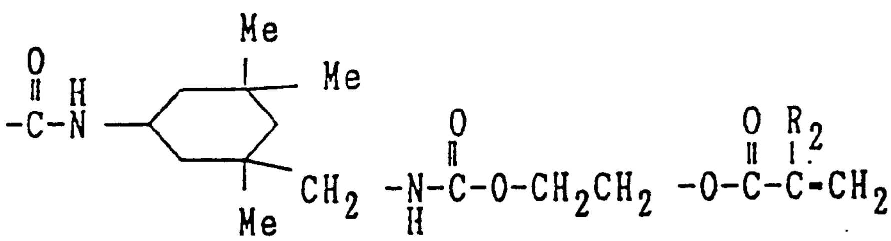

(dans laquelle $R_2$ est H ou Me)].

(II)

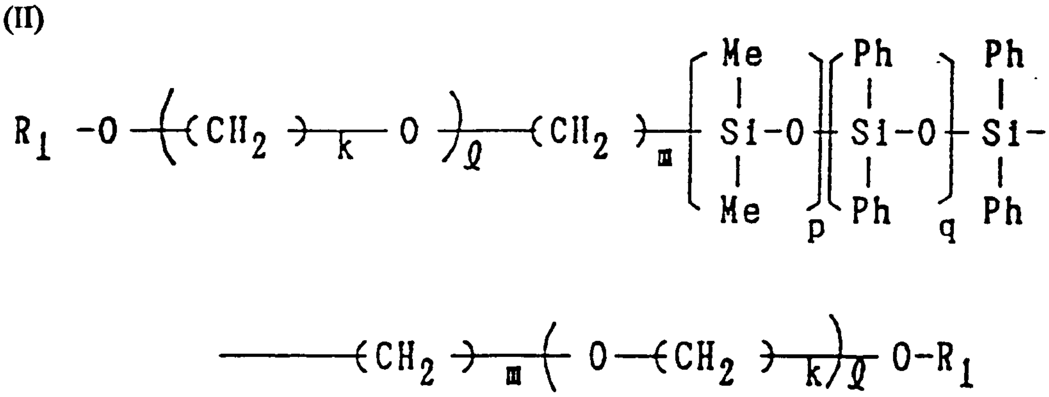

[dans laquelle k est un entier de 1 à 3, l est 0 ou 1, m est un entier de 0 à 3, p + q est un entier de 11 à 139 (à la condition que p ≧ 0 et q ≧ 0), Me est $CH_3$, Ph est

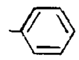 ,

et $R_1$ est tel que défini à la formule (I)], en mélangeant de façon homogène ledit composant monomère, en moulant le mélange résultant dans un moule, en fermant le moule, en augmentant la température dans un bain-marie à température constante par étapes ou en continu dans l'intervalle de température compris entre 25°C et 150°C et en réalisant la polymérisation pendant approximativement 5 à 144 heures.

2. Procédé selon la revendication 1, dans lequel on réalise la polymérisation après avoir remplacé l'air dans la solution et dans le moule par un gaz inerte et le moule étant fermé.

3. Procédé selon la revendication 1 ou 2, dans lequel l'oligomère siloxane de formule (I) ou de formule (II) a un poids moléculaire de 800 à 6 000.

4. Procédé selon l'une quelconque des revendications 1 à 3, dans lequel le mélange de monomère pour réaliser le copolymère contient 0,1 à 15 % en poids d'oligomère siloxane de formule (I) et/ou d'oligomère siloxane de formule (II).

5. Procédé selon l'une quelconque des revendications 1 à 3, dans lequel le mélange monomère pour réaliser le copolymère est un mélange qui contient, comme composants essentiels, au moins un (méth)acrylate contenant du fluor et au moins un (méth)acrylate de siloxanyle.

6. Procédé de préparation de lentilles de contact à partir d'un matériau de lentilles de contact qu'on peut obtenir selon un procédé suivant l'une quelconque des revendications 1 à 5 en transformant ledit matériau de lentilles de contact sous la forme de lentilles par un procédé de fabrication de lentilles de contact.

7. Procédé selon la revendication 6, dans lequel on réalise ledit procédé de transformation des lentilles de contact par des procédures de transformation mécanique sélectionnées parmi la découpe et/ou le polissage.

8. Procédé de préparation des lentilles de contact à partir de matériau de lentilles de contact qu'on peut obtenir selon un procédé suivant l'une quelconque des revendications 1 à 5 par moulage du mélange de monomère tel qu'il est défini à la revendication 1, dans un moule ayant un rayon de courbure prédéfini, et en moulant le mélange monomère en lentille.

9. Matériau de lentilles de contact comprenant un copolymère obtenu à partir d'un mélange de monomère contenant comme composant essentiel, un oligomère siloxane de formule suivante (I) et/ou un oligomère siloxane de formule suivante (II),

(I)

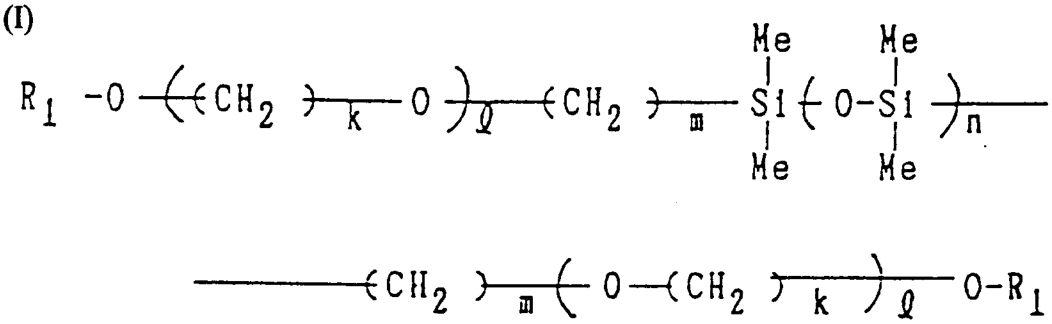

[dans laquelle k est un entier de 1 à 3, l est 0 ou 1, m est un entier de 0 à 3, n est un entier de 9 à 199, Me est $CH_3$, et

$R_1$ est

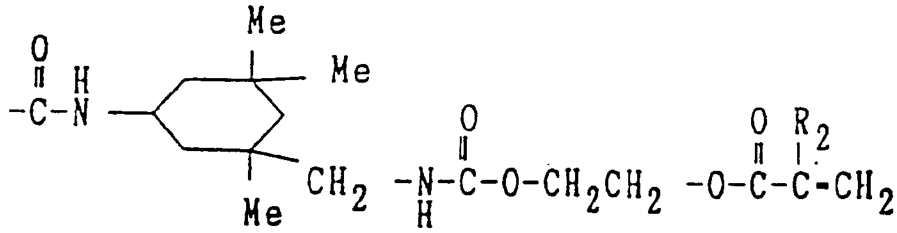

(dans laquelle $R_2$ est H ou Me)].

(II)

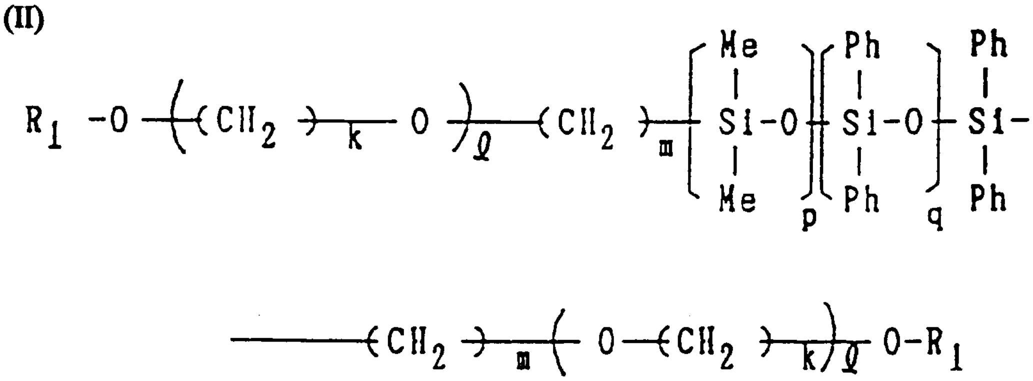

[dans laquelle k est un entier de 1 à 3, l est 0 ou 1, m est un entier de 0 à 3, p + q est un entier de 11 à 139 (à condition que p ≧ 0 et q ≧ 0), Me est $CH_3$, Ph est

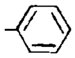 ,

et $R_1$ est tel que défini à la formule (I).]

**10.** Lentilles de contact réalisées par un traitement d'un copolymère obtenu à partir d'un mélange de monomère contenant comme composant essentiel, un oligomère siloxane de formule suivante (I) et/ou un oligomère siloxane de formule suivante (II),

(I)

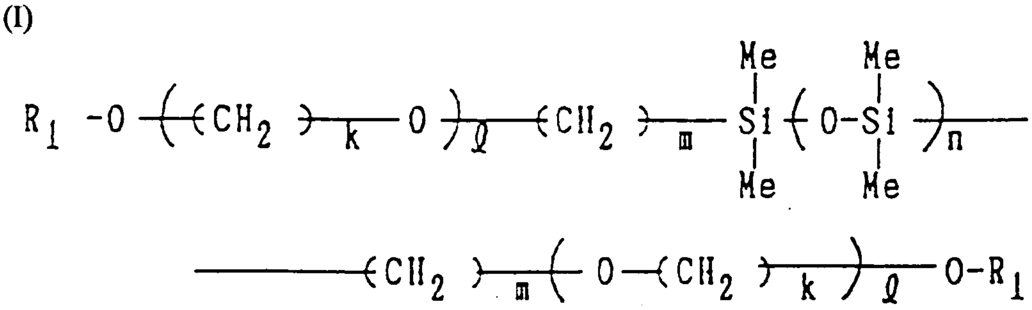

[dans laquelle k est un entier de 1 à 3, l est 0 ou 1, m est un entier de 0 à 3, n est un entier de 9 à 199, Me est $CH_3$, et
$R_1$ est

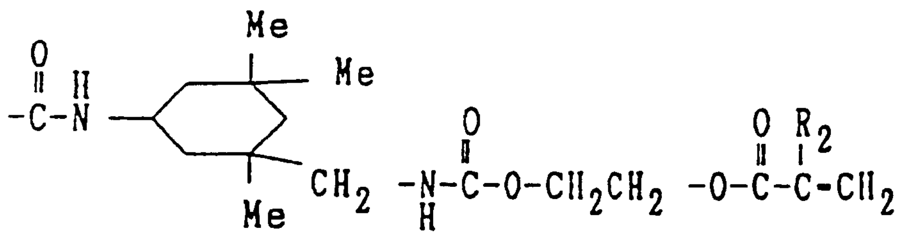

(dans laquelle $R_2$ est H ou Me)].

(II)

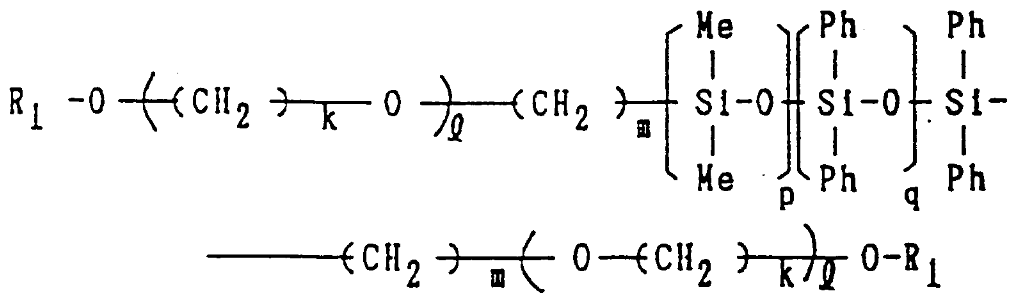

[dans laquelle k est un entier de 1 à 3, l est 0 ou 1, m est un entier de 0 à 3, p + q est un entier de 11 à 139 (à condition que p ≧ 0 et q ≧ 0), Me est $CH_3$, Ph est

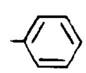 ,

et $R_1$ est tel que défini à la formule (I).]